(19) Europäisches Patentamt
European Patent Office
Office européen des brevets

(11) Publication number: **0 356 261 A2**

(12) **EUROPEAN PATENT APPLICATION**

(21) Application number: **89308683.5**

(22) Date of filing: **25.08.89**

(51) Int. Cl.$^5$: **H 01 M 4/02**
H 01 M 10/40

(30) Priority: **26.08.88 US 237592**

(43) Date of publication of application:
**28.02.90 Bulletin 90/09**

(84) Designated Contracting States:
**AT BE DE ES FR GB IT NL SE**

(71) Applicant: **MHB JOINT VENTURE**
**3020 Newmark Drive**
**Miamisburg Ohio 45342 (US)**

(72) Inventor: **Lundsgaart, Jordan S.**
**Gronnegade 4**
**DK-5700 Svendborg (DK)**

**Shackle, Dale R.**
**P.O. Box 392**
**Springboro Ohio 45066 (DK)**

(74) Representative: **Deans, Michael John Percy et al**
**Lloyd Wise, Tregear & CO. Norman House 105-109 Strand**
**London WC2R OAE (GB)**

(54) **Electrodes and electrochemical cells utilising such electrodes.**

(57) An electrode is described comprising a metal foil member having a cathode composition coated on one surface thereof. The composition includes a finely divided energy storage compound encapsulated as individual particles within a cross-linked network of a polymer and an interpenetrating ionically conducting liquid having an alkali metal salt dissolved therein. The particles of the energy storage compound are individually encapsulated within the polymer network such that the particles do not consolidate when the electrode is used in an electrochemical cell.

EP 0 356 261 A2

**Description**

## ELECTRODES AND ELECTROCHEMICAL CELLS UTILISING SUCH ELECTRODES

This invention relates to electrodes and to electrochemical cells utilising such electrodes.

Solid state electrochemical cells are typically constructed with an alkali metal anode, an ionically conducting polymeric electrolyte containing an ionizable alkali metal salt, and a finely divided transition metal oxide as the cathode. The cathode is usually formed by preparing a mixture of an intercalation compound, a polymeric electrolyte, and a conductive filler such as carbon black and coating this mixture on a metal foil member which functions as a current collector.

U.S. Patent 4,631,810 to Hooper et al. discloses a method for making a cathode in which a dispersion of vanadium oxide and acetylene black in polyethylene oxide and acetonitrile is applied to a nickel foil current collector and the solvent is removed.

European patent Application 0 145 498 discloses a method wherein a cathode member may be formed by extrusion. In this method, an intercalation compound and acetylene black are added to a melt of polyethylene oxide and a lithium salt which is extruded. A plasticizing agent may be added to the polymer to prevent the polymer from crystallizing and thereby improve conductivity. Among the plasticizers described in the patent is propylene carbonate.

In these prior methods, the intercalation compound is not fixed within the cell structure such that consolidation of the compound is prevented. Rather, the polymeric materials used in these cathodes appear to yield to the expansive and contractive forces, which are a normal occurrence as the cell is charged and re-charged, allowing the intercalation compound to grow together. A similar effect is observed with other energy storage compounds.

In electrochemical cells employing intercalation compounds in the cathode, as the cell is charged cations from the anode are transported to the cathode where they insert into the crystalline structure of the intercalation compound. As a consequence of this ionic transportation, there is a change in the mass and volume of the anode and cathode. The anode shrinks slightly while the cathode expands. On re-charge, the ionic flow is reversed with cations stored in the cathode flowing to the anode and the mass and volume of the anode and cathode reverse. In secondary cells, the cycle is repeated throughout the battery's life and produces changes in the electrode structure which lead to capacity and current density loss and finally to cell failure.

One of the main causes of electrode structure changes is agglomeration of the intercalation particles which leads to longer diffusion path into the center of the particles and to destruction of the ionically and electronically conducting pathway between the particles.

On approach which has previously been proposed to prevent the cathode from agglomerating has been to encapsulate the cathode in an ionically conductive polymeric shell. This is disclosed in U.S. Patent 4,576,883 to Hope et al. While this approach is effective it increases cost and introduces void space in the cathode. Accordingly, there is a need for alternative approaches to preventing intercalation and other energy storage compounds from agglomerating in these cells.

In accordance with a first aspect of the present invention, there is provided an electrode comprising a metal foil member having a cathode composition coated on one surface thereof, characterised in that said composition includes a finely divided energy storage compound encapsulated as individual particles within a cross-linked network of a polymer and an interpenetrating ionically conducting liquid having an alkali metal salt dissolved therein, wherein the particles of the energy storage compound are individually encapsulated within the polymer network such that the particles do not consolidate when the electrode is used in an electrochemical cell.

While cross-linked polymeric electrolytes have been previously suggested (see, for example, U.S. Patent 4,357,401 to Andre et al. and U.S. Patent 4,654,279 to Bauer et al.) cross-linking has not previously been used to prevent agglomeration of the energy storage compound as with the present invention. Although polymers which have been used in the electrolyte have also been used in the cathode, both of the aforementioned patents are silent with respect to use of a cross-linked network in the cathode and, consequently, the advantages which the cross-linked matrix imparts to a cathode have not been previously known.

In a second and alternative aspect of the present invention, were provide
an electrochemical cell comprising an anode, a cathode and a polymeric electrolyte wherein the cathode includes a crosslinked network of a polymeric material, an energy storage compound and a conductive filler homogeneously dispersed in that network as finely divided particles, and an ionically conducting liquid having an alkali metal salt dissolved there in interpenetrating that polymeric network; wherein the particles of the energy storage compound are individually encapsulated within the polymer network such that they do not substantially consolidate when the cathode is used in an electrochemical cell.

In preferred embodiments the energy storage compound is an intercalation compound.

Solid state electrochemical cells in accordance with the present invention are capable of providing conductivities on the order of $10^{-3}$ ohm $^{-1}$ $cm^{-1}$.

The network which is interpenetrated by the ionically conducting liquid and which encapsulates the intercalation compound may be formed from a conductive polymer or may be a supportive matrix of a non-conductive polymer.

Examples of polymers which may be used to form conductive polymeric networks are described in U.S.

Patent 4,303,748. These polymers have repeating units containing at least one heteroatom such as an oxygen or nitrogen atom. They can be represented as polymers having the repeating unit

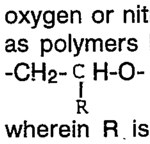

wherein R is hydrogen or a group Ra, $-CH_2OR_a$, $-CH_2OR_eR_a$, $-CH_2N(CH_3)_2$, in which $R_a$ is an alkyl group containing 1 to 16 carbon atoms and preferably 1 to 4 carbon atoms or a cycloalkyl group containing 5 to 8 carbon atoms, and $R_e$ is an ether group of formula $-CH_2-CH_2Op-$ wherein p is a number from 1 to 100, preferably 1 or 2:

or having the repeating unit

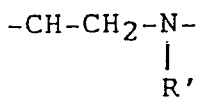

wherein R′ is $R_a$, or ReRa, as defined above; or having the repeating unit

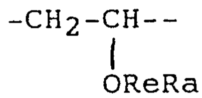

wherein Re and Ra are as defined above. Copolymers of the above polymers may also be useful.

In our electrodes, these polymers are crosslinked to form a network which is sufficiently rigid that agglomeration of the energy storage compound as the cell is charged, discharged and recharged is prevented. These polymers may be crosslinked in a number of ways. For example, U.S. Patent 4,357,401 to Andre et al. discloses PEO-PPO copolymers which are crosslinked by ethylene diamine. Where the polymer includes moieties of primary or secondary alcohols or amines, the polymer may be crosslinked by reaction with a crosslinking agent such as a polyisocyanate. For example, polyethylene oxides may also be crosslinked by using a crosslinking agent such as poly(ethylene glycol) diacrylate and a thermal free radical initiator such as 2,2′-azobis(2-methylpropionitrile) as described in our European Patent Application 88310179.2 (Publication No. EP-A-0318161). See also U.S. Patent 3,734,876. Radiation and thermally initiated free radical addition reactions may also be used to form the crosslinked polymeric network.

A particularly useful group of radiation polymerizable compounds for providing a crosslinked conductive matrix is obtained by reacting a low molecular weight polyethylene glycol with acrylic or methacrylic acid. Also useful in the present invention are radiation curable materials such as acrylated epoxies, e.g., Bishphenol A epoxy diacrylate, polyester acrylates, copolymers of glycidyl ethers and acrylates or a vinyl compound such as N-vinylpyrrolidone. The latter provides a non-conductive matrix. In selecting these monomers, monomers are selected which do not adversely react with the anodic metal which tends to be highly reactive. For example, halogenated monomers such as vinyl chloride are preferably avoided. Monomers which react with the anodic metal, but which react with it very slowly may be used, but are not desirable.

Preferably, the aforementioned radiation polymerizable polyethylenically unsaturated compounds have a molecular weight of about 200 to 2,000 and more preferably 200 to 800. Still more preferably they are liquids at temperatures less than 30°C. Examples of radiation curable materials include polyethylene glycol-300 diacrylate (average PEO molecular weight about 300), polyethylene glycol-480 diacrylate (average PEO molecular weight about 480) and the corresponding methacrylates.

It may be desirable to include a radiation curable comonomer in the composition to reduce the glass transition temperature and improve the conductivity of the polymer. Any suitable monoacrylate such as tetrahydrofurfuryl acrylate, tetrahydrofurfuryl methacrylate, methoxypolyethylene glycol monomethacrylate, 2-ethoxyethyl acrylate, 2-methoxyethyl acrylate or cyclohexyl methacrylate may be used for this purpose. Triacrylates such at TMPTA, trimethylolpropane ethoxylated triacrylates (TMPEOTA) or trimethylolpropanepropoxy triacrylate may be used to introduce crosslinking of the polymer. Monoacrylates may be used in an amount of about 5 to 50% by weight based on the total amount of radiation polymerizable material. The triacrylates are used in amounts of about 2 to 30% by weight on the same basis.

Examples of crosslinked non-conductive supportive polymers are described in U.S. Patent 4,654,279 to Bauer et al. and include epoxies, polyurethanes, polymethacrylates, polyacrylates, poyacrylonitrile, and polystyrene.

The radiation inert liquids which form the ionically conductive liquid interpenetrating phase can be any low volatile aprotic polar solvent. Preferably, these materials are characterized by a boiling point greater than about 80°C. Low volatility simplifies manufacture and improves shelf life. Representative examples are propylene carbonate, γ-butyrolactone, 1,3-dioxolane, and 2-methyltetrahydrofuran. Less polar solvents having heteroatoms capable of bonding alkali metal cations are also useful. Polyethylene glycol dimethyl ether (PEGDME) is one such example. Glymes such as tetraglyme, hexaglyme and heptaglyme are also desirable solvents.

Ionizable alkali metal salts useful in this invention include those salts conventionally used in solid state electrochemical cells. Representative examples are sodium, lithium, and ammonium salts of less mobile anions of weak bases having a large anionic radius. Examples may be selected from the group consisting of $I^-$, $Br^-$, $SCN^-$, $C10_4^-$, $BF_4^-$, $PF_6^-$, $AsF_6^-$, $CF_3C00$-, $CF_3SO^-$, etc. Specific examples are $LiC10_4$, $NaC10_4$, $LiF_3CS0_3$, and $LiBF_4$.

The salt may be used up to an amount which does not exceed its solubility limit in the electrolyte. The amount will therefore vary with the nature of the liquid solvent. As a general rule, the maximum amount of salt within its solubility limit should be used to maximize the ionic conductivity of the electrolyte. In most applications about 10 to 60 parts salt is used per 100 parts of liquid phase.

Intercalation compounds and electronically conductive materials useful in the present invention are

well known in the art. Representative examples of intercalation compounds are $V_6O_{13}$, $V_2O_5$, $MoO_2$ and $TiS_2$. Other examples are described in the literature. The intercalation compound preferably has a particle size of less than 1 micron but can range up to 20 microns. Other examples can be found in the aforementioned references.

The conductive filler is usually carbon black. Certain conductive polymers (which are characterized by a conjugated network of double bonds) like polypyrol and polyacetylene may also be used for this purpose.

It is critical that the intercalation compound be dispersed in the crosslinked polymer network in such a manner that each of the individual particles of the compound is separated from the other by a layer of the crosslinked polymeric network. In addition, the polymeric network must be crosslinked sufficiently that the network prevents particle agglomeration as the cell is charged and re-charged.

To prepare a cathode, a mixture of the uncrosslinked polymer or the unpolymerized monomer or oligomer and the initiator or crosslinking agent is prepared and blended with the liquid electrolyte, the ionizable salt, the intercalation compound and conductive filler. Blending is carried out such that the particles of the intercalation compound become individually and homogeneously dispersed in the mixture as described above.

The cathode is prepared by coating the mixture on a metal foil member and curing the cathode composition. The cathode composition may be coated by solvent coating using conventional coating techniques such as a doctor blade or an extrusion method may be used. The cathode is coated in a thickness of about 10 to 100 and typically 30 to 60 microns.

Where a solvent casting technique is used, in addition to the components discussed above, the cathode composition will contain a volatile solvent such as tetrahydrofuran. After coating, th solvent is removed if a solvent casting method is used and the composition is cured.

Cathode compositions in accordance with the present invention perferably contain about 20 to 80 parts by weight of the intercalation compound, about 1 10 parts of a conductive filler, about 1 10 parts of an ionizable metal salt and about 5 to 50 parts of a liquid electrolyte per 100 parts of the crosslinked polymer.

## Claims

1. An electrode comprising a metal foil member having a cathode composition coated on one surface thereof, characterised in that said composition includes a finely divided energy storage compound encapsulated as individual particles within a cross-linked network of a polymer and an interpenetrating ionically conducting liquid having an alkali metal salt dissolved therein, wherein the particles of the energy storage compound are individually encapsulated within the polymer network such that the particles do not consolidate when the electrode is used in an electrochemical cell.

2. An electrode according to Claim 1, further characterised in that said energy storage compound is an intercalation compound.

3. An electrode according to Claim 1 or Claim 2, further characterised in that said ionically conducting liquid is a low volatile aprotic solvent.

4. An electrode according to Claim 3, further characterised in that said solvent is selected from propylene carbonate, $\gamma$ -butyrolactone, 1,3-dicxolane, and 2-methyl-tetrahydrofuran.

5. An electrode according to any preceding claim, further characterised in that said polymer is a conductive polymer.

6. An electrode according to Claim 5, further characterised in that said polymer is polyethylene oxide.

7. An electrochemical cell comprising an anode, a cathode, and a polymeric electrolyte, characterised in that said cathode comprises an electrode according to any preceding claim.

8. An electrochemical cell according to Claim 7, further characterised in that said anode is an alkali metal anode.

9. An electrochemical cell according to Claim 8, further characterised in that said anode is lithium.